# EUROPÄISCHE PATENTANMELDUNG

(11) **EP 1 327 389 A1**
(43) Veröffentlichungstag der Anmeldung: **16.07.2003**
(21) Anmeldenummer: 02027653.1
(22) Anmeldetag: 01.01.2003
(51) Int. Cl.: A22B 5/00

(54) **Verfahren zur Validierung von Schlachtproduckten**

(30) Priorität: 11.01.2002 DE 10201245
(71) Anmelder: BUNDESDRUCKEREI GmbH, D-10958 Berlin (DE)
(72) Erfinder: Weber, Uwe, 22399 Hamburg (DE)

(57) **Zusammenfassung**

Die Erfindung lehrt ein Verfahren zur Validierung von für den menschlichen Verzehr bestimmten Schlachtprodukten aus Nutztieren, wobei die Schlachtprodukte aus einem Nutztier einer Wiegung unterzogen werden, wobei ein Vergleich des Gesamtgewichts der Schlachtprodukte mit dem Gewicht des zur Schlachtung kommenden Nutztieres durchgeführt wird, und wobei Schlachtprodukte mit einem Gesamtgewicht oberhalb eines anhand des Gewichtes des Nutztieres bestimmten definierten Grenzwertes keine Freigabe erhalten.

## Beschreibung

### Gebiet der Erfindung

Die Erfindung betrifft ein Verfahren zur Validierung von für den menschlichen Verzehr bestimmten Schlachtprodukten aus Nutztieren, wobei die Schlachtprodukte aus einem Nutztier einer Wiegung unterzogen werden. Als Nutztiere sind alle Tierarten und -rassen bezeichnet, die zum Zwecke der Schlachtung gehalten werden.

### Hintergrund der Erfindung und Stand der Technik

Aus der Literaturstelle Agrarmarkt 10/2001, Seiten 84-86, ist es bekannt, Nutztiere nach der Geburt mit einer Nutztieridentifikationseinrichtung auszustatten, welche beispielsweise einen Transponder umfasst. Diese Nutztieridentifikationseinrichtung wird an einem Nutztier befestigt. Der Transponderchip speichert im Laufe des Nutztierlebens wichtige Daten wie Geburtsort, Elterntiere oder Mastbetrieb. In u. a. einem Schlachthof oder Zerlegebetrieb ist ein elektronisches Lesegerät zur Auslesung des Transponders eingerichtet. Alle beteiligten Betriebe sind online vernetzt. Bei Transport eines Nutztieres fließen die Daten gleichsam mit und bei einer Zieldestination kann eine Überprüfung durch Auslesung des Transponders erfolgen. Insofern lässt sich ein Schlachtprodukt dem geschlachteten Nutztier zuordnen.

Im Hinblick auf unerwünschte Manipulationen besteht bei dem insofern bekannten Verfahren das Risiko, dass Schlachtprodukte eines Tieres fälschlicherweise einem anderen Tier zugeordnet werden. Insbesondere könnten Schlachtprodukte eines kranken Tieres unerlaubterweise mit einer Zuordnung zu einem gesunden Tier ausgestattet werden, wodurch möglicherweise gesundheitsgefährdende Schlachtprodukte in den Verbrauch gelangen.

### Technisches Problem

Der Erfindung liegt daher das technische Problem zugrunde, ein Verfahren zur Validierung von für den menschlichen Verzehr bestimmten Schlachtprodukten aus Nutztieren anzugeben, in welchem die Manipulationsmöglichkeit bei der Zuordnung von Schlachtprodukten zu den geschlachteten Nutztieren reduziert ist.

Grundzüge der Erfindung und bevorzugte Ausführungsbeispiele

Zur Lösung dieses technischen Problems lehrt die Erfindung ein Verfahren zur Validierung von für den menschlichen Verzehr bestimmten Schlachtprodukten aus Nutztieren, wobei die Schlachtprodukte aus einem Nutztier einer Wiegung unterzogen werden, wobei ein Vergleich des Gesamtgewichts der Schlachtprodukte aus diesem Nutztier mit dem Gewicht dieses Nutztieres durchgeführt wird, und wobei Schlachtprodukte mit einem Gesamtgewicht oberhalb eines anhand des Gewichtes des Nutztieres bestimmten definierten Grenzwertes keine Freigabe erhalten. Die gesamten Schlachtprodukte eines Nutztieres können so bis zu einer Freigabe im Schlachthof zurückgehalten werden.

Die Erfindung nutzt zunächst die Erkenntnis, dass bei der Schlachtung von Nutztieren der Anteil für eine Weiterverwendung oder den Verzehr bestimmter Schlachtprodukte (Nutztierrasse - spezifisch) statistisch definierbar ist. Basierend auf dieser Erkenntnis lehrt die Erfindung, dass ein ungewöhnlich hoher Gewichtsanteil der Schlachtprodukte im Verhältnis zum Gesamtgewicht des geschlachteten Nutztieres für eine Manipulation spricht. Mit der Erfindung wird insbesondere erreicht, dass Manipulationen durch Zuordnung von Schlachtprodukten eines Nutztieres zu einem anderen Nutztier vermieden werden können. Die verbleibenden Manipulationsmöglichkeiten beschränken sich allenfalls darauf, dass Schlachtprodukte eines (kranken) Nutztieres so vielen verschiedenen anderen (gesunden) Nutztieren zugeordnet werden, dass der "Gewichtszuwachs" gleichsam statistisch eingeebnet wird. Eine solche Manipulation wäre jedoch extrem aufwändig und stände in keinem Verhältnis mehr zum damit erreichten Gewinn.

Für die Bestimmung des Grenzwertes und dessen Auswertung gibt es mehrere Alternativen. Im einfachsten Fall ergibt sich der Grenzwert durch Subtraktion des Gewichts des Schlachtabfalls des Nutztieres von dem Gewicht des Nutztieres. In dieser Ausführungsform ist es erforderlich, die Schlachtabfälle Nutztier-spezifisch einer Wiegung zu unterziehen.

Auf eine Bestimmung des Nutztier-spezifischen Schlachtabfallgewichts kann verzichtet werden, wenn der Grenzwert durch Multiplikation eines Nutztierrasse-spezifischen Schlachtproduktanteils mit dem Gewicht des Nutztieres gebildet wird. Der Nutztierrasse-spezifische Schlachtproduktanteil ist dabei für jede Nutztierrasse statistisch ermittelt worden. Im Kern handelt es sich bei dieser statistischen Ermittlung um die Erstellung einer Funktion zwischen Schlachtproduktanteil (bzw. dem Gesamtgewicht der Schlachtprodukte) einerseits und dem Gewicht des Nutztieres andererseits, wobei die Funktion linear ist.

Die vorstehend beschriebene Grenzwertbestimmung mit einer linearen Funktion kann insofern unerwünschte Toleranzen aufweisen, als dass die lineare Funktion lediglich eine Näherung sein kann. Vielmehr wird die Funktion in Strenge regelmäßig nicht-linear verlaufen. In einer anderen Ausführungsform der Erfindung wird daher der Grenzwert dadurch bestimmt, dass in einer zuvor bestimmten Nutztierrasse-spezifischen Funktion zwischen dem Gewicht des Nutztieres und dem Schlachtproduktanteil oder dem Gesamtgewicht der Schlachtprodukte der mit einem Gewicht eines konkreten zu schlachtenden Nutztieres korrelierte Schlachtproduktanteil oder das korrelierte Gesamtgewicht der Schlachtprodukte bestimmt wird. Auch in diesem Fall wird die Funktion statistisch bestimmt werden, wobei Wertepaare anhand unterschiedlicher Gewichte der Nutztiere einer Nutztierrasse erhalten werden.

In einer bevorzugten Ausführungsform der Erfindung wird der Grenzwert durch einen definierten Toleranzwert erhöht oder erniedrigt. Dieser Toleranzwert erlaubt statistische Fehler in der Bestimmung des Grenzwertes bzw. Abweichungen eines konkreten Nutztieres von einem statistischen Mittelwert.

Bevorzugterweise kann ein zur Schlachtung kommendes Nutztier mit einer Nutztieridentifikationseinrichtung ausgestattet sein, wobei die Nutztieridentifikationseinrichtung Nutztier-indiviuelle Daten, beispielsweise das Gewicht und Daten zu Medikamentenbehandlung bzw. Blutanalysedaten hierzu, trägt, und wobei im Zuge der Schlachtung des Nutztieres die Schlachtprodukte bei Freigabe mit einer Produktinformationseinrichtung versehen werden, welche die Nutztier-individuellen Daten, beispielsweise die vorstehend genannten,des Nutztieres trägt. Die Nutztieridentifikationseinrichtung kann grundsätzlich beliebig ausgebildet sein. Es kann sich im einfachsten Fall um einen Ohrclip handeln, auf welchem Daten des Nutztieres, wie Identifikationsnummer, Gewicht usw., im Klartext angegeben sind. Die Angabe der Nutztier-individuellen Daten kann auch verschlüsselt, beispielsweise im bekannten Bar-Code angebracht sein. Schließlich ist es auch möglich, im Rahmen der Nutztieridentifikationseinrichtung einen Transponderchip vorzusehen, in dessen Speicher die Nutztier-individuellen Daten eingespeichert und auslesbar sind. In letzterem Falle ist eine elektronische Überwachung der Historie jedes Nutztieres möglich, insbesondere wenn zentrale Trust-Center eingerichtet werden, in welchen die Nutztier-individuellen Daten gespeichert und an involvierte Stellen weitergeleitet werden. Involvierte Stellen sind beispielsweise Züchter, Mäster, veterinärmedizinische Dienste, Überwachungsbehörden und Schlachthöfe. Wesentlich bei dieser Ausführungsform der Erfindung ist nunmehr, dass eine Nutztier-individuelle Information der Nutztieridentifikationseinrichtung auf den Schlachtprodukten bzw. deren Verpackung gleichsam weitergetragen wird. Dies ermöglicht es, jedes einzelne Schlachtprodukt auf das zugrundeliegende Nutztier zurückzuverfolgen. Dies erlaubt es weiterhin, bei nachträglicher Entdeckung einer Erkrankung des Nutztieres, selektiv genau jene Schlachtprodukte aus dem Handel zu nehmen, welche von dem betroffenen Nutztier herrühren. Eine Produktinformationseinrichtung ist im einfachsten Falle ein in Klartext beschriftetes Label. Die Erfindung erlaubt so beispielsweise einem Fleischprodukt im Handel nicht nur das Nutztier, sondern ggf. auch dessen Medikamentendaten zuzuordnen.

Im Folgenden wird die Erfindung anhand von lediglich ein Ausführungsbeispiel darstellenden Figuren näher erläutert. Es zeigen:
- Figur 1:: eine Schweine-spezifische Funktion zwischen dem Gewicht eines Hausschweines und dem Schlachtproduktanteil hieraus, mit Eintragung der Daten für ein konkretes Schwein,
- Figur 2:: den Gegenstand der Figur 1 mit Daten eines anderen Schweins.

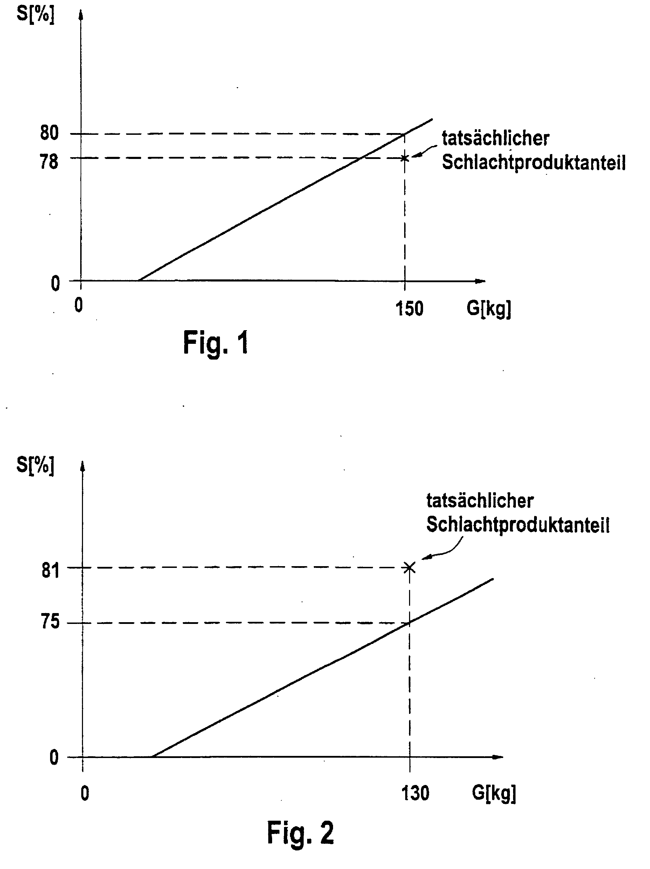

In der Figur 1 erkennt man einen nichtlinearen Verlauf der Schweine-spezifischen Funktion zwischen dem Gewicht des Nutztieres und dem Schlachtproduktanteil. Zu validieren sind Schlachtprodukte eines Schweines dessen Wiegung 150 kg ergab.Aus Figur 1 lässt sich für das in diesem Fall geschlachtete konkrete Schwein ein Schlachtproduktanteil von 80% ermitteln. Dies ist der Grenzwert, welcher anhand der Wiegung der tatsächlich gewonnenen Schlachtprodukte nicht überschritten werden darf. In dem konkreten Fall ergibt eine Wiegung der Schlachtproduktanteile sowie Division durch das Gewicht des Schweines einen Wert von lediglich 78%. Ein Vergleich der bestimmten 78% mit dem Grenzwert von 80% ergibt, dass der Grenzwert unterschritten wird, so dass die Schlachtprodukte freigegeben werden können.

Im Falle des anhand der Figur 2 diskutierten Schweines ergibt sich entsprechend als Grenzwert ein maximaler Schlachtproduktanteil von 75%. Im Falle des konkreten, dargestellten Schweines liegt der tatsächlich ermittelte Schlachtproduktanteil jedoch bei 81%, so dass von einer Manipulation durch fälschliche Zuordnung von Schlachtprodukten anderer Nutztiere zu dem konkreten Schwein auszugehen ist. Daher wird für alle dem betreffenden Schwein zugeordneten Schlachtprodukte keine Freigabe gewährt.

## Patentansprüche

1. Verfahren zur Validierung von für den menschlichen Verzehr bestimmten Schlachtprodukten aus Nutztieren,
wobei die Schlachtprodukte aus einem Nutztier einer Wiegung unterzogen werden,
wobei ein Vergleich des Gesamtgewichts der Schlachtprodukte aus diesem Nutztier mit dem Gewicht dieses Nutztieres durchgeführt wird, und
wobei Schlachtprodukte mit einem Gesamtgewicht oberhalb eines anhand des Gewichtes des Nutztieres bestimmten definierten Grenzwertes keine Freigabe erhalten.

2. Verfahren nach Anspruch 1, wobei der Grenzwert durch Subtraktion des Gewichts des Schlachtabfalls des Nutztieres von dem Gewicht des Nutztieres bestimmt wird.

3. Verfahren nach Anspruch 1, wobei der Grenzwert durch Multiplikation eines Nutztierrasse-spezifischen Schlachtproduktanteils mit dem Gewicht des Nutztieres gebildet wird.

4. Verfahren nach Anspruch 1, wobei der Grenzwert dadurch bestimmt wird, dass in einer zuvor bestimmten Nutztierrasse-spezifischen Funktion zwischen dem Gewicht des Nutztieres und dem Schlachtproduktanteil oder dem Gesamtgewicht der Schlachtprodukte der mit einem Gewicht eines konkreten zu schlachtenden Nutztieres korrelierte Schlachtproduktanteil oder das korrelierte Gesamtgewicht der Schlachtprodukte bestimmt wird.

5. Verfahren nach einem der Ansprüche 1 bis 4, wobei der Grenzwert durch einen Toleranzwert erhöht oder erniedrigt ist.

6. Verfahren nach einem der Ansprüche 1 bis 5, wobei ein zur Schlachtung kommendes Nutztier mit einer Nutztieridentifikationseinrichtung ausgestattet ist, wobei die Nutztieridentifikationseinrichtung Nutztier-individuelle Daten, insbesondere das Gewicht, trägt, und wobei im Zuge der Schlachtung des Nutztieres die Schlachtprodukte bei Freigabe mit einer Produktinformationseinrichtung versehen werden, welche zumindest einen Nutztier-individuellen Datenwert des Nutztieres trägt.
